(19) Europäisches Patentamt
European Patent Office
Office européen des brevets

(11) Veröffentlichungsnummer: **0 309 840 B1**

(12) **EUROPÄISCHE PATENTSCHRIFT**

(45) Veröffentlichungstag der Patentschrift: **01.07.92**

(51) Int. Cl.[5]: **C08G 18/32**, C08G 18/65

(21) Anmeldenummer: **88115270.6**

(22) Anmeldetag: **17.09.88**

# (54) Verfahren zur Herstellung von Polyurethanharnstoff-Elastomeren.

(30) Priorität: **29.09.87 DE 3732726**

(43) Veröffentlichungstag der Anmeldung:
**05.04.89 Patentblatt 89/14**

(45) Bekanntmachung des Hinweises auf die Patenterteilung:
**01.07.92 Patentblatt 92/27**

(84) Benannte Vertragsstaaten:
**AT BE CH DE ES FR GB IT LI NL SE**

(56) Entgegenhaltungen:

**POLYMER SCIENCE U.S.S.R., Band 23, Nr. 11, 1981, Seiten 2715-2721, Oxford, GB; F.A. KRYUCHKOV et al.: "The synthesis of polyurethane ureas with a specific MWD of their rigid segments"**

**CHEMICAL ABSTRACTS, Band 94, Nr. 4, Februar 1981, Seite 37, Zusammenfassung Nr. 48271g, Columbus, Ohio, US; & SU-A-686 390 (ALL-UNION SCIENTIFIC-RESEARCH INSTITUTE OF SYNTHETIC RESINS) 15-10-1980**

(73) Patentinhaber: **BAYER AG**

**W-5090 Leverkusen 1 Bayerwerk(DE)**

(72) Erfinder: **Ruckes, Andreas, Dr.**
**Herderstrasse 13**
**W-5090 Leverkusen 3(DE)**
Erfinder: **Grögler, Gerhard, Dr.**
**von-Diergardt-Strasse 48**
**W-5090 Leverkusen 1(DE)**
Erfinder: **Kopp, Richard, Dr.**
**Bilharzstrasse 15**
**W-5000 Köln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die vorliegende Erfindung betrifft ein Einstufen-Verfahren zur Herstellung von hochtemperaturbeständigen, kompakten oder zelligen Polyurethanharnstoff-Elastomeren. Das Kennzeichen des Verfahrens besteht darin, daß spezielle, hochschmelzende, in fester Phase vorliegende aromatische Diaminodiphenylharnstoffe, höhermolekulare Polyhydroxyl- bzw. Polyaminoverbindungen und flüssige Polyisocyanate in heterogener Reaktion nach der Reaktionsspritzgußtechnik umgesetzt werden.

Die Herstellung von kompakten oder zelligen Polyurethan-Elastomeren aus Polyisocyanaten, höhermolekularen Polyhydroxyl- bzw. Polyaminoverbindungen in Gegenwart von Katalysatoren und gegebenenfalls Kettenverlängerungs-und/oder Vernetzungsmitteln sowie Treibmitteln, Hilfsmitteln und/oder Zusatzstoffen ist bekannt. Bei geeigneter Wahl der Ausgangskomponenten ist es nach diesem Verfahren möglich, sowohl elastische als auch starre Produkte bzw. alle dazwischen liegenden Varianten herzustellen.

Systeme, welche Diamine als Kettenverlängerer enthalten, konnten jedoch erst nach Entwicklung der Hochdruck-RIM-Technologie zur Herstellung von gegebenenfalls zelligen, elastischen Formkörpern mit einer kompakten Oberflächenschicht eingesetzt werden. Im wesentlichen werden hierbei Diethyltoluoldiamine und ähnliche aromatische Diamine, deren Aminogruppen durch ortho-ständige Alkylsubstituenten sterisch behindert sind, verwendet.

Derartige Verfahren zur Herstellung von Polyurethan-Elastomeren mit Polyaminen als Kettenverlängerer werden beispielsweise in der DE-A-2 622 951 (US-P-4 218 543) und den EP-A-0 081 701, 26 915 und 69 286 beschrieben.

Trotz der sterischen Hinderung sind die Aminogruppen jedoch noch so reaktionsfähig, daß die Startzeiten der entsprechenden Systeme im Bereich weniger Sekunden liegen. Aus diesem Grund treten erhebliche Schwierigkeiten auf, große und/oder komplizierte Formhohlräume zu füllen oder durch Erhöhung der Menge an aminischen Kettenverlängerern Produkte mit höherer Biegefestigkeit zu erhalten. Im letzteren Fall wurden in der Vergangenheit oberhalb einer bestimmten Menge an Diamin nur unbrauchbare Produkte erhalten, die beim Entformen brechen.

Die aus den bekannten Verfahren resultierenden Formkörper werden beispielsweise in der Schuhindustrie als Sohlen oder in der Automobilindustrie als Karosserieteile eingesetzt.

Es besteht die Notwendigkeit, Kettenverlängerer zu finden, die zur Herstellung von Formulierungen für das Reaktions-Spritzgießen (RSG) verwendet werden können, die eine ausreichende Startzeit zur Füllung großer Formen, die kurze Formstandzeiten für ausreichend kurze Zykluszeiten, die angemessene Eigenschaften beim Entformen und die nach dem Aushärten ausgezeichnete physikalische und thermische Eigenschaften, wie hohe Biegefestigkeit oder Wärmeformbeständigkeit, besitzen.

In der US-PS-4 631 298 werden zu diesem Zweck z.B. Mischungen von flüssigen, verschieden reaktiven aromatischen Diaminen verwendet, deren Gel-Zeiten jedoch immer noch im Bereich weniger Sekunden liegen.

Die Aufgabe der vorliegenden Erfindung bestand darin, Systeme mit aromatischen Diaminen als Kettenverlängerer zu entwickeln, die zur Herstellung von gegebenenfalls zelligen Elastomeren nach der RSG-Technik geeignet sind, wobei die Systeme solche Startzeiten besitzen, daß problemlos große Formteile füllbare sind, oder daß die Verarbeitung nach dem in der Schuhindustrie fast ausschließlich angewendeten Niederdruck-Verfahren erfolgen kann. Zur Erzielung ausreichender Zykluszeiten sollen die Produkte eine gute green-strength und nach dem Aushärten ausgezeichnete physikalische Eigenschaften besitzen.

Diese Aufgabe konnte nun überraschenderweise durch Verwendung von hochschmelzenden p- und/oder m-Diaminodiphenylharnstoffen als heterogene Kettenverlängerer zur Herstellung der Polyurethanstoff-Elastomeren gelöst werden.

Der Einsatz fester Diamine als heterogene Kettenverlängerer ist an sich bekannt. So werden in der US-PS-3 105 062 feste Diamine in Polyurethansystemen verwendet, die dann unterhalb ihres Schmelzpunktes in heterogener Phase ausgehärtet werden. Dieses Verfahren wird jedoch ausschließlich zur Herstellung von Gießelastomeren nach der Prepolymer-Technik angewendet, wobei ausdrücklich darauf hingewiesen und sogar mit einem Beispiel belegt wird, daß nach einem Einstufenverfahren, im dem Polyol, Polyisocyanat und festes Diamin in einem Schritt zusammengemischt und dann ausgehärtet werden, völlig unbrauchbare Produkte resultieren.

In der DE-OS 2 635 400 werden schließlich heterogene Systeme mit langen Topfzeiten unter Verwendung fester Diamine beschrieben, die vorzugsweise nach der Prepolymertechnik verarbeitet werden. Der hier bevorzugt verwendete o-Diaminodiphenylharnstof erweist sich jedoch als zu unreaktiv gegenüber Isocyanaten, so daß diese Verbindung völlig ungeeignet als Kettenverlängerer für schnelle one-shot-Systeme ist.

Es war deshalb völlig überraschend, daß, wenn man spezielle p- und/oder m-Diaminodiphenylharnstoffe

in Kombination mit höhermolekularen Polyhydroxyl- bzw. Polyaminoverbindungen in einer heterogenen Einstufenreaktion nach der RSG-Technik mit flüssigen Polyisocyanaten umsetzt, mechanisch hochwertige, homogene Polyurethanharnstoffelastomere mit ausreichendem green-strength-Verhalten erhalten werden.

Überraschend ist insbesondere die Homogenität der Verfahrensprodukte, da erwartet werden mußte, daß bei Verwendung von pulverförmigen Reaktionspartnern, also bei heterogener Reaktionsführung, im Einstufenverfahren nur unbrauchbare, Gelpartikel enthaltende Elastomere entstehen würden.

Gegenstand der Erfindung ist somit ein Verfahren zur Herstellung von kompakten oder zelligen, elastischen Formkörpern mit einer geschlossenen Oberflächenschicht aus Polyurethanharnstoff-Elastomeren auf der Basis von

a) organischen Polyisocyanaten

b) höhermolekularen Polyhydroxyl- bzw. Polyaminoverbindungen mit mindestens zwei reaktiven Wasserstoffatomen,

c) Diaminodiphenylharnstoffen als Kettenverlängerungsmittel,

d) gegebenenfalls Katalysatoren und gegebenenfalls

e) geringen Mengen Ethylenglykol,

f) weiteren Kettenverlängerern und/oder Vernetzungsmitteln,

g) Treibmitteln und

h) Hilfsmitteln und/oder Zusatzstoffen,

das dadurch gekennzeichnet ist, daß man Diaminodiphenylharnstoffe c) der allgemeinen Formel I als heterogene Kettenverlängerer in feingemahlener Form einsetzt, bei denen sich die $NH_2$-Gruppen in m- und/oder p-Stellung

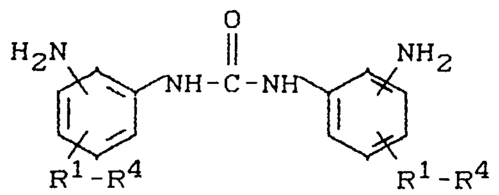

(I)

zur Harnstoffgruppe befinden und $R^1$, $R^2$, $R^3$, $R^4$ (gleich oder verschieden ) = H, $-C_1-C_6$-Alkyl-Rest.

Die Komponenten a) bis c) und gegebenenfalls d) bis h) werden als one-shot-System nach der RSG-Technik sowohl auf Hochdruck- als auch auf Niederdruck-Maschinen verarbeitet.

Zu den für das erfindungsgemäße Verfahren verwendbaren Ausgangskomponenten a) bis c) und gegebenenfalls d) bis h) ist folgendes auszuführen.

a) Als organische Polyisocyanate a) kommen solche, wie sie beispielsweise in der DE-PS-2 922 951, S. 11-13, beschrieben sind, in Betracht.

Besonders geeignet für das erfindungsgemäße Verfahren sind bei Raumtemperatur flüssige Di- bzw. Polyisocyanate auf Basis von 4,4'-Diisocyanatodiphenylmethan. Auch reines 4,4'-Diisocyanatodiphenylmethan (m.p. - 40 ° C) ist erfindungsgemäß brauchbar,

b) Als Komponente b) werden beim erfindungsgemäßen Verfahren vorzugsweise Polyhydroxypolyalkylenether des Molekulargewichtsbereichs 600 bis 12.000, vorzugsweise 1.800 bis 7.000, eingesetzt. Die erfindungsgemäßen infrage kommenden, mindestens zwei, vorzugsweise zwei bis drei, Hydroxylgruppen aufweisenden Polyether sind solche der an sich bekannten Art und werden z.B. in der DE-PS-2 622 951, S. 13-14, beschrieben.

Erfindungsgemäß können jedoch auch weitere Polyhydroxylverbindungen eingesetzt werden, wie sie in der DE-PS-2 622 951 auf den Seiten 14-17 beschrieben werden. Dazu gehören z.B. Hydroxylgruppen aufweisende Polyester, -thioether, -acetate, -carbonate oder -esteramide, wie sie für die Herstellung von homogenen und von zelligen Polyurethanen an sich bekannt sind.

Bei den erfindungsgemäß in Frage kommenden höhermolekularen Verbindungen können die endständigen gegenüber Isocyanatgruppen reaktionsfähigen Gruppen auch teilweise oder ausschließlich aus primären und/oder sekundären aromatisch oder aliphatisch gebundenen Aminogruppen und zum Rest aus primären und/oder sekundären, aliphatisch gebundenen Hydroxylgruppen bestehen. In diesen Verbindungen können die die Aminogruppen tragenden, endständigen Reste mit den höhermolekularen Verbindungen auch über Urethan- oder Estergruppen verknüpft sein. Die Herstellung dieser Aminoverbindung erfolgt in an sich bekannter Weise und ist z.B. ih der EP-AS-0204 246 am Beispiel von

Diaminopolyethern auf den Seiten 10 und 11 beschrieben.

Bevorzugt eingesetzt werden Aminopolyether, die nach DE-OS 2 948 419 durch Hydrolyse von endständigen Isocyanatgruppen aufweisenden Verbindungen erhalten werden. Bei diesem Verfahren werden vorzugsweise zwei oder drei Hydroxylgruppen aufweisende Polyether mit Polyisocyanaten zu NCO-Prepolymeren umgesetzt und in einem zweiten Schritt die Isocyanatgruppe durch Hydrolyse in eine Aminogruppe überführt.

Selbstverständlich können erfindungsgemäß als Ausgangskomponente b) auch beliebige Gemisch der beispielhaft genannten Verbindungen mit gegenüber Isocyanatgruppen reaktionsfähigen Gruppen eingesetzt werden.

c) Wesentliches Merkmal der vorliegenden Erfindung ist die Verwendung von m- und/oder p-Diaminodiphenylharnstoffen der allgemeinen Formel I als heterogene Kettenverlängerer zur Herstellung der kompakten oder zelligen Polyurethanharnstoffelastomere.

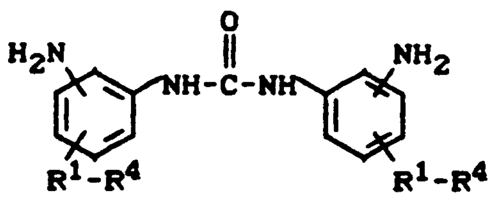

(I)

Die $NH_2$-Gruppen befinden sich in m- bzw. p-Stellung zur Harnstoffgruppe. $R^1$, $R^2$, $R^3$ und $R^4$ können gleich oder verschieden sein und sind entweder H oder lineare und/oder verzweigte Alkylreste mit 1 bis 6 C-Atomen.

Die erfindungsgemäß geeigneten Diaminodiphenylharnstoffe c) werden nach an sich bekannten Methoden hergestellt. So können z.B. Nitroaniline mit Phosgen oder Diphenylcarbonat in die entsprechenden Dinitrodiphenylharnstoffe überführt und anschließend durch Reduktion in die gewünschten Diaminodiphenylharnstoffe überführt werden. Eine andere allgemein anwendbare Methode ist die Reaktion von Aminoacetaniliden mit Phosgen oder Diphenylcarbonat mit anschließender alkalischer Verseifung der Acetamid-Gruppe zum gewünschten Produkt.

Eine besonders einfache und deshalb zur Herstellung der erfindungsgemäßen Harnstoffe bevorzugte Methode ist die Umsetzung von aromatischen p- bzw. m-Diaminen mit Harnstoff, wie sie in der US-PS-1 617 847 (in einem inerten Lösungsmittel oder in der Schmelze) oder der US-PS 2 503 797 (in schwefelsaurer oder neutraler wäßriger Lösung) beschrieben ist.

Bedingt durch die Herstellungsmethode werden jedoch in der Regel neben den monomeren Diaminodiphenylharnstoffen I auch höhermolekulare, mehrkernige Produkte der allgemeinen Formel II gebildet, die jedoch innerhalb gewissen Grenzen keinen negativen

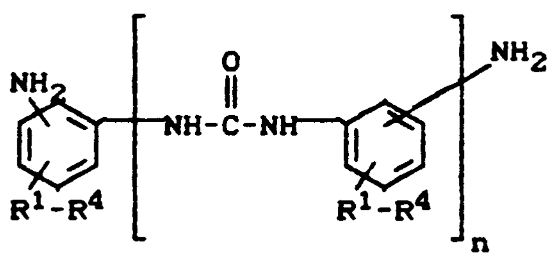

$n \geq 2$ (II)

Einfluß auf die Eigenschaften der Elastomeren haben. Der Anteil der Harnstoffe mit n = 1 - 3 muß jedoch mindestens 60 Gew.-%, bezogen auf die Gesamtmenge an c) betragen, wobei der Monomeranteil mit $n = 1 \geqq 10$ Gew.-% ist. Bevorzugt werden jedoch Harnstoffe mit möglichst hohen Anteil an "Monomeren" I (n = 1). Die Komponente c) wird im allgemeinen in einer Menge von etwa 1 - 70 Gew.-% - bezogen auf b) - eingesetzt.

Die fest anfallenden Diaminodiphenylharnstoffe werden im allgemeinen zunächst fein gemahlen, was z.B. in einer Kugelmühle geschehen kann, bis sie eine durchschnittliche Korngröße von 1 bis 50 µm, vorzugsweise 3 bis 10 µm, besitzen. Die erhaltenen Pulver werden dann in der verwendeten Polyhdroxylverbindung suspendiert. Selbstverständlich ist es aber auch möglich, die Suspension direkt durch

Vermahlen des aromatischen Diamins in der Polyhydroxylverbindung nach an sich bekannten Methoden herzustellen. Die so erhaltenen Dispersionen werden dann mit einem Polyisocyanat umgesetzt.

Beispiele für bevorzugte Diamine zur Herstellung der erfindungsgemäßen Harnstoffe sind z.B. p-Phenylendiamin, m-Phenylendiamin, 2,5-Diaminotoluol, 2,4-Diaminotoluol, 2,6-Diaminotoluol, 1-Methyl-3,5-diethyl-2,6-diaminobenzol und 1,3,5-Triethyl-2,4-diaminobenzol. Besonders bevorzugt ist der aus 2,4-Diaminotoluol hergestellte Diaminodiphenylharnstoff.

d) Als Katalysatoren d), ohne deren Mitverwendung - zumindest bei Einsatz OH-haltiger Verbindungen - kein Formteil mit kurzer Formstandzeit bzw. mit guter green strength und technisch interessanten mechanischen Eigenschaften erhalten wird, werden solche, wie sie beispielhaft in der DE-A-2 622 951 auf den Seiten 19 bis 21 beschrieben sind, eingesetzt.

Dazu gehören z.B. organische Metallverbindungen, wie Zinn(II)-octoat, oder Amine, wie z.B. 1,4-Diaza-bicyclo[2,2,2]octan.

Die in der DE-A-2 622 951 genannten Katalysatoren werden in der Regel allein oder in Kombination untereinander in einer Menge zwischen etwa 0,001 und 10 Gew.-%, vorzugsweise 0,05 bis 1 Gew.-%, bezogen auf die Menge an Verbindung b), eingesetzt.

Die erfindungsgemäßen Katalysatoren b) sollen die Reaktionsfähigkeit der Polyhydroxylverbindung b) so erhöhen, daß nach dem Vermischen der Ausgangskomponenten das reagierende Gemisch unter den Verarbeitungsbedingungen eine Fließzeit (Zeit, innerhalb derer die Mischung noch förderbar ist) zwischen 10 sec und 60 sec besitzt.

f) Neben den erfindungsgemäß zu verwendenden Diaminophenylharnstoffen c) können gegebenenfalls auch weitere Polyamine und/oder Polyole in beliebiger Kombination als Kettenverlängerer und/oder Vernetzungsmittel f) zur Modifizierung der Eigenschaften der Formkörper eingesetzt werden, Hierzu gehören beispielsweise aromatische Diamine, die in jeweils einer ortho-Stellung zu den Aminogruppen einen Alkylsubstituenten aufweisen, wie sie in der EP-AS-0 204 246 auf den Seiten 13 bis 14 beschrieben werden. Beispiele für derartige Amine sind 1-Methyl-3,5-diethyl-2,4-diaminobenzol oder 2,4-Diaminomesitylen. Als Polyole kommen Verbindungen mit mindestens zwei Hydroxylgruppen von einem Molekulargewicht bis 600 in Frage.

Als Beispiele für derartige Verbindungen seien genannt: Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glyzerin, Trimethylolpropan, Hexantriol(1,2,6), Trimethylolethan, Pentaerythrit, Chinit, Mannit und Sorbit, Diethylenglykol, Triethylenglykol, Tetraethylenglykol, Polyethylenglykole mit einem Molekulargewicht bis 600, Dipropylenglykol, Polypropylenglykole mit einem Molekulargewicht bis 600, Dibutylenglykol, Polybutylenglykole mit einem Molekulargewicht bis 600, 4,4'-Dihydroxydiphenylpropan, Di-hydroxymethyl-hydrochinon, Ethanolamin, Diethanolamin und Triethanolamin.

Zur Herstellung von Formteilen mit geschlossener Oberfläche und einem zelligen Inneren werden g) Treibmittel, wie sie z.B. in der DE-A-2 622 951, S, 21-22, beschrieben sind, verwendet. So können z,B, als Treibmittel g) Wasser und/oder Monofluordichlormethan o,ä, eingesetzt werden.

Erfindungsgemäß können auch weitere Hilfs- und/oder Zusatzstoffe h) mitverwendet werden. Dazu gehören oberflächenaktive Zusatzstoffe, wie Emulgatoren und Schaumstabilisatoren, Zellregler, Stabilisatoren gegen Alterungs- und Witterungseinflüsse, Weichmacher und fungistatisch und bakteriostatisch wirkender Substanzen sowie flammhemmende Substanzen, Weichmacher, Farbstoffe und Füllstoffe. Derartige Verbindungen werden beispielhaft in der DE-A-2 622 951 auf den Seiten 22-23 und im Kunststoff-Handbuch, Band IV, herausgegeben von Vieweg und Höchtlen, Carl-Hanser-Verlag, München 1966, z,B, auf den Seiten 103 bis 113, beschrieben.

Die Herstellung der Polyurethanharnstoffelastomeren erfolgt nach der bekannten Reaktionsspritzguß-Technik, entweder nach dem Hoch- oder Niederdruckverfahren, Für die Reaktionsgeschwindigkeit der Gesamtmischung ist hierbei die Reaktivität der jeweiligen Diaminodiphenylharnstoffe c) gegenüber den Polyisocyanaten von untergeordneter Bedeutung, im wesentlichen hängt die Vernetzungsgeschwindigkeit vielmehr von der Tendenz des Harnstoffs ab, sich in der Reaktionsmischung aufzulösen. Die Löslichkeit der erfindungsgemäßen Harnstoffe c) kann in gewissen Grenzen durch die Verwendung von Polyhydroxylverbindungen b) mit einem hohen Ethylenoxid-Gehalt oder durch Zusatz von geringen Mengen Ethylenglykol als Lösungsvermittler erhöht werden. Dadurch besteht die Möglichkeit, die Reaktionsgeschwindigkeit des Gesamtsystems und damit die Startzeit und Formstandzeit den erforderlichen Verhältnissen in gewissen Grenzen anzupassen. Beispielsweise führt der Zusatz von Ethylenglykol zu einer erhöhten Reaktionsgeschwindigkeit und damit zu kürzeren Start- und Formstandzeiten bzw. kürzeren Zykluszeiten.

Die Menge des in die Form eingebrachten, gegebenenfalls schaumfähigen Gemisches wird im übrigen so bemessen, daß der Formkörper eine Dichte von 0,3 bis 1,4 $g/cm^3$, vorzugsweise von 0,9 bis 1,1 $g/cm^3$,

aufweist.

Als Ausgangstemperatur des in die Form eingebrachten Gemischs wird eine Temperatur zwischen 10 und 70 ° C, vorzugsweise 20 bis 40 ° C, gewählt. Die Temperatur der Form beträgt 40 bis 120 ° C, vorzugsweise 50 bis 95 ° C.

Gegebenenfalls kann es vorteilhaft sein, übliche Formtrennmittel, beispielsweise auf Wachs- oder Siliconbasis, zur Verbesserung der Entformung, einzusetzen.

Beim erfindungsgemäßen Verfahren wird die Polyisocyanatmente vorzugsweise so bemessen, daß im rekationsfähigen Gemisch eine Isocyanat-Kennzahl von 70 bis 130, insbesondere 90 bis 110, vorliegt.

Die nach dem erfindungsgemäßen Verfahren erhältlichen kompakten Polyurethanharnstoffelastomeren eignen sich zur Verwendung in der Automobilindustrie, beispielsweise als Stoßstangenabdeckungen und Karosserieteile wie Kotflügel, Spoiler und Radkästenverbreiterungen sowie technische Gehäuseteile und Laufrollen, die zelligen Polyurethan-Elastomeren finden beispielsweise als Armlehnen, Kopfstützen, Sicherheitsabdeckungen im Automobilinnenraum sowie als Motorrad- und Fahrradsättel, Sitzkissen, Deckschichten in Verbundschaumstoffen und mit Dichten von 0,30 bis 0,70 g/cm$^3$, insbesondere als Schuhsohlen, Anwendung.

Das erfindungsgemäße Verfahren soll anhand der folgenden Beispiele noch näher erläutert werden.

## Beispiele

### Beispiel 1

A-Komponente: Mischung aus

50,2 Gew.-Teilen Diaminodiphenylharnstoff auf der Basis von 2,4-Toluylendiamin mit einer Aminzahl von 330 mg KOH/g, einem Anteil an Harnstoffen mit n = 1 bis 3 von 83 Gew.-%, worin der Anteil an monomerem Harnstoff mit n = 1 57 Gew.-% beträgt,
100 Gew.-Teile eines Polyethers der Hydroxylzahl 26, der durch Addition von 78 Gew.-% Propylenoxid und anschliepende Addition von 22 Gew.-% Ethylenoxid an Trimethylolpropan erhalten wurde,
0,3 Gew.-Teile Dimethylzinndilaurat,
0,15 Gew.-Teile 1,4-Diaza(2,2,2)bicyclooctan.

B-Komponente:

Umsetzungsprodukt aus Tripropylenglykol und 4,4′-Diphenylmethan-diisocyanat (23 % NCO).

100 Gew.-Teile der Komponente A und 41 Gew.-Teile der Komponente B - entsprechend einer Kennzahl von 100 -wurden mit Hilfe eines Schnellrührers innerhalb von 10 sec. intensiv vermischt.

Anschließend wurded 484,5 g dieser Reaktionsmischung in ein auf 90 ° C temperiertes Metallformwerkzeug eingetragen und in dem geschlossenen Werkzeug 10′ aushärten gelassen. Nach 2-stündigem Temperen der entformten Platte bei 110 ° C wurden folgende mechanischen Werte gemessen:

| | |
|---|---|
| Dichte: | 1,1 g/cm$^2$ |
| Dichte der Prüfplatte: | 4 mm ± 0,2 mm |
| Reißfestigkeit (DIN 53 504): | 15,83 MPa |
| Weiterreißfestigkeit (DIN 53 515): | 62,2 KN/m |
| Reißdehnung (DIN 53 504): | 100 % |
| Elastizität (DIN 53 512): | 36 % |
| Shore D (DIN 53 505): | 65 |

### Beispiel 2

A-Komponente: Mischung aus

49,2 Gew.-Teilen Diaminodiphenylharnstoff auf der Basis von 2,4-Toluylendiamin mit einer Aminzahl von 290 mg KOH/g, einem Anteil an Harnstoffen mit n = 1 bis 3 von 70,5 Gew.-%, wobei der Gehalt an monomerem Harnstoff mit n = 1 39 Gew.-% beträgt,
100 Gew.-Teilen eines Polyethers der Hydroxylzahl 28, der durch Addition von 83 Gew.-% Propylenoxid und anschließende Addition von 17 Gew.-% Ethylenoxid an Trimethylolpropan erhalten wurde,
0,015 Gew.-Teilen Dimethylzinndilaurat,
0,1 Gew.-Teilen 1,4-Diaza(2,2,2)bicyclooktan.

B-Komponente wie in Beispiel 1

100 Gew.-Teile der Komponente A und 36,8 Gew.-Teile der Komponente B - entsprechend einer Kennzahl von 100 - wurden wie in Beispiel 1 verarbeitet.

| | |
|---|---|
| Mischzeit: | 10 Sekunden |
| Formtemperatur: | 80 ° C |
| Formstandzeit: | 10 Minuten |
| 2 Stunden bei 150 ° C getempert Dicke der Prüfplatte: | 4 mm ± 0,2 mm |
| Dichte: | 1,08 g/cm$^3$ |
| Reißfestigkeit (DIN 53 504): | 21,75 MPa |
| Weiterreißfestigkeit (DIN 53 515): | 54,2 KN/m |
| Reißdehnung (DIN 53 504): | 250 % |
| Elastizität (DIN 53 512): | 43 % |
| Shore D (DIN 53 505): | 66 |

Beispiel 3

A-Komponente: Mischung aus

5,4 Gew.-Teilen Diaminodiphenylharnstoff aus Beispiel 2,
100 Gew.-Teilen des Polyethers aus Beispiel 2,
0,44 Gew.-Teilen Dimethylzinndilaurat.

B-Komponente wie in Beispiel 1

100 Gew.-Teile der Komponente A und 54,8 Gew.-Teile der Komponente B - entsprechend einer Kennzahl von 100 - wurden wie in Beispiel 1 verarbeitet.

| | |
|---|---|
| Mischzeit: | 13 Sekunden |
| Formtemperatur: | 65 ° C |
| Formstandzeit: | 2 Minuten |
| 45 Minuten bei 120 ° C getempert Dicke der Prüfplatte: | 4 mm ± 0,2 mm |
| Dichte: | 1,08 g/cm$^3$ |
| Reißfestigkeit (DIN 53 504): | 2,81 MPa |
| Weiterreißfestigkeit (DIN 53 515): | 7,3 KN/m |
| Reißdehnung (DIN 53 504): | 250 % |
| Elastizität (DIN 53 512): | 51 % |
| Shore A (DIN 53 505): | 56 |

Beispiel 4

A Komponente: Mischung aus

3 Gew.-Teilen Diaminodiphenylharnstoff aus Beispiel 2,
100 Gew.-Teilen eines Polyesters, der durch Kondensation von Adipinsäure und einem Gemisch aus Ethylenglykol, Butandiol-1,4 und Hexandiol-1,6 mit einer Hydroxylzahl von 60,7 erhalten wird (erhalten durch Umsetzung von Adipinsäure mit Ethylenglykol/Butandiol-1,4 im Molverhältnis 6:4, anschließend weitere Umsetzung des Vorprodukts mit Adipinsäure und Butandiol/Hexandiol im Molverhältnis 6:4),
0,4 Gew.-Teilen Dimethylzinndilaurat.

B-Komponente:

Umsetzungsprodukt aus einem Polyester auf der Basis von Adipinsäure, Ethylenglykol und Butandiol-1,4 (im Molverhältnis 1:0,74:0,36) mit einer Hydroxylzahl von 52 - 58 und einem Gemisch aus 4,4'-Diphenylmethandiisocyanat und carbodiamidmodifiziertem 4,4'-Di-phenylmethan (19 % NCO).

100 Gew.-Teile der Komponente A und 26,1 Gew.-Teile der Komponente B - entsprechend einer Kennzahl von 100 - wurden wie in Beispiel 1 verarbeitet.

| | |
|---|---|
| Mischzeit | 10 Sekunden |
| Formtemperatur | 85 ° C |
| Formstandzeit | 5 Minuten |
| 45 Minuten bei 120 ° C getempert Dicke der Prüfplatte | 4 mm ± 0,2 mm |
| Dichte | 1,08 g/cm$^3$ |
| Reißfestigkeit (DIN 53 504) | 9,13 MPa |
| Weiterreißfestigkeit (DIN 53 515) | 17,2 KN/m |
| Reißdehnung (DIN 53 504) | 850 % |
| Elastizität (DIN 53 512) | 57 % |
| Shore A (DIN 53 505) | 58 |

Beispiel 5

In diesem Beispiel wird vergleichend eine harte Polyurethan-Integralschaum Formulierung mit und ohne Verwendung eines Diaminodiphenylharnstoffes vorgestellt.

| | Rezeptur I | (Gew.-Teile) II |
|---|---|---|
| **Komponente A: Mischung aus** | | |
| einem Diaminodiphenylharnstoff auf der Basis von 2,4-Toluylendiamin mit einer Aminzahl von 327 mg/KOH/g., einem Anteil von Harnstoffen mit n = 1 bis 3 von 85,5 Gew.-%, wobei der Anteil an monomerem mit n = 1 58 Gew.-% beträgt, | - | 10 |
| einem Polyether mit der Hydroxylzahl 42, hergestellt durch Propoxylierung eines Gemisches aus Trimethylolpropan und Propylenglykol (Molverhältnis 3:1) und anschließende Ethoxylierung (Molverhältnis Propylenoxid : Ethylenoxid = 3 : 7), | 60 | 60 |
| einem Polyether mit der Hydroxylzahl 860, hergestellt durch Propoxylierung von Trimethylolpropan, | 40 | 40 |
| OS 50, einem Polysiloxan-Polyalkylenoxid-Blockpolymeren der Firma Goldschmidt, Essen | 1 | 1 |
| Dimethylbenzylamin, | 3 | 3 |
| Tetramethylguanidin, | 0,5 | 0,5 |
| $H_3PO_4$ (85 %ig), | 0,2 | 0,2 |
| Trichlorluormethan | 10 | 10 |
| **Komponente B:** | | |
| Durch Phosgenierung eines Anilin-Formaldehyd-Kondensats erhaltenen Polyisocyanats mit einer Viskosität von 130 mPa.s bei 25°C und einem NCO-Gehalt von 31 Gew.-% | 133 | 141,7 |

Die Komponenten werden mit Hilfe eines Schnellrührers innerhalb von 12 Sekunden intensiv vermischt und dann in eine 310 x 245 x 10 mm große, auf 60° C temperierte Form eingetragen. Nach 10 Minuten wird eine ausgehärtete Platte mit einer Rohdichte von 0,587 $g/cm^3$ entnommen, von der die mechanischen Eigenschaften ermittelt werden

| | Rezeptur | |
|---|---|---|
| | I | II |
| Formbeständigkeit in der Wärme unter Biegebeanspruchung* | 95 °C | 105 °C |
| E-Modul (53512) | 1130 MPa | 1106 MPa |
| Reißdehnung (53504) | 4,5 % | 3,6 % |
| Reißfestigkeit (53504) | 38 MPa | 33,6 MPa |

* Tragbalkenanordnung, Biegespannung O,294 MPa, Aufheizrate 50 °C/h, Temperatur bei 10 mm Durchbiegung.

Das Beispiel zeigt, daß durch den Zusatz des Diaminodiphenylharnstoffes die Verarbeitung praktisch nicht beeinträchtigt wird und daß das Diamin bei der schnellen Härtungsreaktion mitreagiert, was an dem verbesserten Wärmebiegewert zu erkennen ist.

**Patentansprüche**

**1.** Verfahren zur Herstellung von kompakten oder zelligen, elastischen Formkörpern mit einer geschlossenen Oberflächenschicht, aus PolyurethanharnstoffElastomeren auf der Basis von
a) organischen Polyisocyanaten,
b) höhermolekularen Polyhydroxyl- bzw. Polyaminverbindungen mit mindestens zwei reaktiven Wasserstoffatomen,
c) Diaminodiphenylharnstoffen als Kettenverlängerungsmittel,
d) gegebenenfalls Katalysatoren und gegebenenfalls
e) geringen Mengen Ethylenglykol,
f) weiteren Kettenverlängerern und/oder Vernetzungsmitteln
g) Treibmitteln und
h) Hilfsmitteln und/oder Zusatzstoffen,
dadurch gekennzeichnet, daß man Diaminodiphenylharnstoffe c) der allgemeinen Formel I, bei denen sich die $NH_2$-Gruppen in m- und/oder

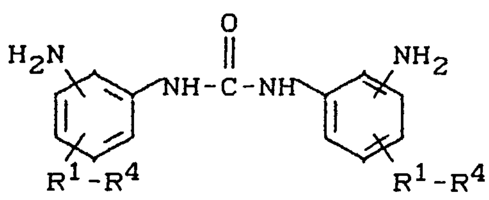

(I)

p-Stellung zur Harnstoffgruppe befinden und $R^1$, $R^2$, $R^3$, $R^4$ unabhängig voneinander = -H, -$C_1$-$C_6$-Alkyl,
als heterogene Kettenverlängerer in feingemahlener Form einsetzt und daß die Komponenten a) bis g) als one-shot-System nach der Hoch- oder Niederdruck-Reaktions-Spritzgußtechnik verarbeitet werden.

**2.** Verfahren nach Anspruch 1, dadurch gekennzeichnet, daß die Diaminodiphenylharnstoffe in Form eines Pulvers mit einer durchschnittlichen Korngröße von 1 bis 50 µm, bevorzugt von 3 bis 10 µm, eingesetzt werden.

**3.** Verfahren nach den Ansprüchen 1 und 2, dadurch gekennzeichnet, daß neben den monomeren Diaminodiphenylharnstoffen I auch höhermolekulare, mehrkernige Produkte der allgemeinen Formel II

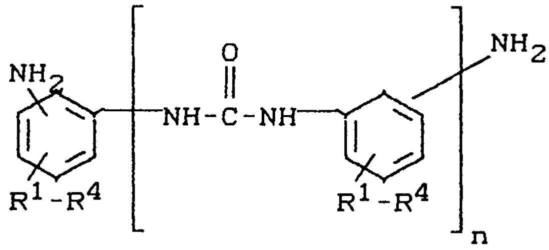

$n \geq 2$ (II)

mitverwendet werden können, wobei der Anteil mit n = 1-3 mindestens 60 Gew.-%, und der Anteil mit n = 1 mindestens 10 Gew.-%, jeweils bezogen auf die Gesamtmenge an c), beträgt.

4. Verfahren nach Anspruch 3, dadurch gekennzeichnet, daß der Anteil an Diaminodiphenylharnstoffen mit n = 1 - 3 mindestens 80 Gew.-%, bezogen auf die Gesamtmenge an c), beträgt und daß der Anteil mit n = 1 wenigstens 30 Gew.-%, bezogen auf die Gesamtmenge an c), beträgt.

5. Verfahren nach den Ansprüchen 1 bis 4, dadurch gekennzeichnet, daß als Kettenverlängerer c) Diaminodiphenylharnstoffe auf der Basis von 2,4-Diaminotoluol verwendet werden.

6. Verfahren nach den Ansprüchen 1 bis 5, dadurch gekennzeichnet, daß 0,1 bis 10 Gew.-%, bevorzugt 1 bis 5 Gew.-%, Ethylenglykol, bezogen auf Komponente c), mitverwendet werden können.

7. Verfahren nach den Ansprüchen 1 bis 6, dadurch gekennzeichnet, daß die reaktionsfähigen Diaminodiphenylharnstoffe c) in einer Menge von 1 bis 70 Gew.-%, bezogen auf die Komponente b), zum Einsatz gelangen und die Menge an organischem Polyisocyanat a) so bemessen wird, daß im Reaktionsgemisch eine Isocyanat-Kennzahl von 70 bis 130 vorliegt.

**Claims**

1. A process for the production of compact or cellular, elastic mouldings having a compact surface skin from polyurethane urea elastomers based on
   a) organic polyisocyanates,
   b) relatively high molecular weight polyhydroxyl or polyamine compounds containing at least two reactive hydrogen atoms,
   c) diaminodiphenyl ureas as chain-extending agents,
   d) optionally catalysts and optionally
   e) small quantities of ethylene glycol,
   f) other chain-extending agents and/or crosslinking agents,
   g) blowing agents and
   h) auxiliaries and/or additives,

   characterized in that diaminodiphenyl ureas c) corresponding to general formula I

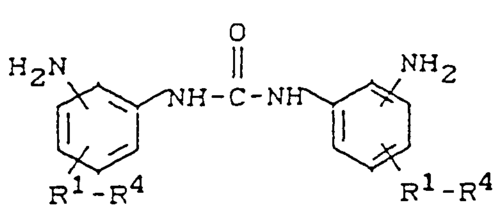

(I)

in which the $NH_2$ groups are in the m- and/or p-position to the urea group and R', $R^2$, $R^3$ and $R^4$ independently of one another represent -H, -$C_{1-6}$ alkyl,
are used in finely ground form as heterogeneous chainextending agents and in that components a) to g) are processed as a one-shot system by high-pressure or lowpressure reaction injection moulding.

2. A process as claimed in claim 1, characterized in that the diaminodiphenyl ureas are used in the form of a powder having an average particle size of 1 to 50 µm and preferably 3 to 10 µm.

3. A process as claimed in claims 1 and 2, characterized in that relatively high molecular weight polynuclear products corresponding to general formula II

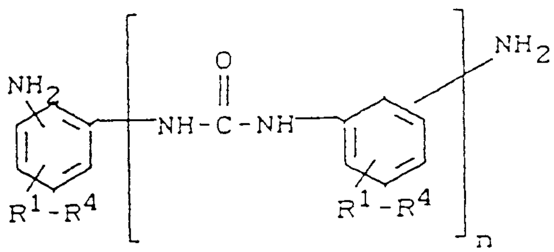

$n \geq 2$ (II)

may be used in addition to the monomeric diaminodiphenyl ureas I, the percentage content with n = 1 to 3 being at least 60% by weight and the percentage content with n = 1 being at least 10% by weight, based on the total quantity of c).

4. A process as claimed in claim 3, characterized in that the percentage content of diaminodiphenyl ureas with n = 1 to 3 is at least 80% by weight, based on the total quantity of c), and in that the percentage content with n = 1 is at least 30% by weight, based on the total quantity of c).

5. A process as claimed in claims 1 to 4, characterized in that diaminodiphenyl ureas based on 2,4-diaminotoluene are used as the chain-extending agent c).

6. A process as claimed in claims 1 to 5, characterized in that 0.1 to 10% by weight and preferably 1 to 5% by weight ethylene glycol, based on component c), may also be used.

7. A process as claimed in claims 1 to 6, characterized in that the reactive diaminodiphenyl ureas c) are used in a quantity of 1 to 70% by weight, based on component b), and the quantity of organic polyisocyanate a) is gauged in such a way that an isocyanate index of 70 to 130 is present in the reaction mixture.

**Revendications**

1. Procédé de production de pièces moulées élastiques compactes ou cellulaires à couche de surface fermée, à partir d'élastomères de polyuréthanne-urée à base
   a) de polyisocyanates organiques,
   b) de composés polyhydroxyliques ou polyaminés de poids moléculaires élevés ayant au moins 2 atomes réactifs d'hydrogène,
   c) de diaminodiphénylurées comme agents d'allongement de chaîne,
   d) éventuellement de catalyseurs et, le cas échéant,
   e) de faibles quantités d'éthylène-glycol,
   f) d'autres agents d'allongement de chaîne et/ou d'agents de réticulation,
   g) d'agents porogènes et,
   h) de substances auxiliaires et/ou d'additifs,

   caractérisé en ce qu'on utilise des diaminodiphénylurées c) de formule générale I

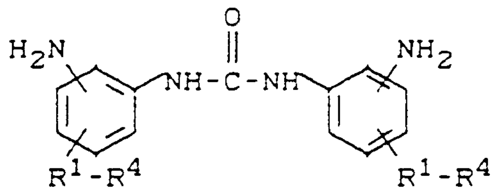

(I)

dans lesquelles les groupes $NH_2$ se trouvent en position méta et/ou en position para par rapport au groupe urée et $R^1$, $R^2$, $R^3$, $R^4$ représentent indépendamment les uns des autres -H, -(alkyle en $C_1$ à $C_6$), comme agents hétérogènes d'allongement de chaîne sous une forme finement broyée, et en ce que des composants a) à g) sont mis en oeuvre comme système one-shot selon la technique réactive de moulage par injection sous haute pression ou basse pression.

**2.** Procédé suivant la revendication 1, caractérisé en ce que les diaminodiphénylurées sont utilisés sous forme d'une poudre dont les grains ont un diamètre moyen de 1 à 50 µm, de préférence de 3 à 10 µm.

**3.** Procédé suivant les revendications 1 et 2, caractérisé en ce qu'on peut utiliser, à côté des diaminodiphénylurées monomères I, également des produits de poids moléculaires élevés à plusieurs noyaux, de formule générale II

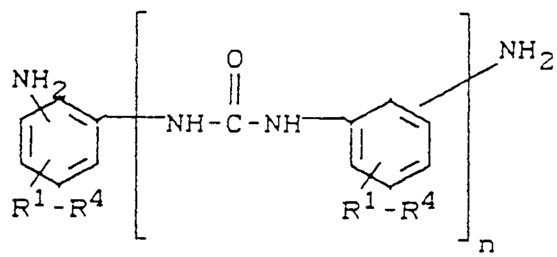

$n \geq 2$ (II)

la fraction pour laquelle n a une valeur de 1 à 3 s'élevant au moins à 60% en poids et la fraction pour laquelle n est égal à 1 s'élevant au moins à 10% en poids, dans chaque cas par rapport à la quantité totale de c).

**4.** Procédé suivant la revendication 3, caractérisé en ce que la fraction de diaminodiphénylurées pour laquelle n a une valeur de 1 à 3 s'élève au moins à 80% en poids par rapport à la quantité totale de c) et en ce que la fraction pour laquelle n est égal à 1 s'élève au moins à 30% en poids par rapport à la quantité totale de c).

**5.** Procédé suivant les revendications 1 à 4, caractérisé en ce qu'on utilise comme agent d'allongement de chaîne c) des diaminodiphénylurées à base de 2,4-diaminotoluène.

**6.** Procédé suivant les revendications 1 à 5, caractérisé en ce qu'on peut utiliser 0,1 à 10% en poids, de préférence 1 à 5% en poids, d'éthylène-glycol, par rapport au composant c).

**7.** Procédé suivant les revendications 1 à 6, caractérisé en ce que les diaminodiphénylurées réactives c) sont utilisées en une quantité de 1 à 70% en poids par rapport au composant b), et la quantité de polyisocyanate organique a) est calculée de manière que le mélange réactionnel ait un indice d'isocyanate de 70 à 130.